# EUROPEAN PATENT SPECIFICATION

(11) **EP 4 510 412 B1**
(45) Date of publication and mention of the grant of the patent: **04.11.2026**
(21) Application number: 24768468.1
(22) Date of filing: 30.04.2024
(51) Int. Cl.: H02J 3/38, H02J 3/00, H02J 3/32, H02J 7/00, H02J 7/35, H02J 13/00, H02S 10/00

(54) **SOLAR NETWORK POWER PLANT SYSTEM AND METHOD FOR OPERATING SAME**
SOLARNETZ-KRAFTWERKSYSTEM UND VERFAHREN ZUM BETREIBEN EINES SOLARNETZ-KRAFTWERKSYSTEMS
SYSTÈME DE CENTRALE ÉLECTRIQUE SOLAIRE DE RÉSEAU ET PROCÉDÉ DE FONCTIONNEMENT ASSOCIÉ

(30) Priority: 30.06.2023 JP 2023107667
(43) Date of publication of application: 19.02.2025
(73) Proprietor: Solar Japan Co., Ltd., Suzaka City, Nagano 382-0097 (JP)
(72) Inventor: NISHIHARA, Hidetsugu, Suzaka City, Nagano 382-0015 (JP)
(74) Representative: K&L Gates LLP
(86) International application number: PCT/JP2024/016639
(87) International publication number: WO 2025/004523

(56) References cited:
- JP-A- 2011 155 795
- JP-A- 2012 196 122
- JP-A- 2013 042 575
- JP-A- 2017 135 920
- JP-A- 2018 098 952
- JP-A- 2020 010 542
- JP-A- 2021 097 558
- JP-A- 2021 136 851
- JP-A- 2023 005 861
- JP-B1- 6 017 715
- JP-B2- 6 909 816
- KR-B1- 102 280 207
- US-A1- 2015 229 128
- US-A1- 2020 106 294
- US-B2- 11 641 112
- "IEC TR 61850-90-9 ED1: Communication networks and systems for power utility automation - Part 90-9: Use of IEC 61850 for Electrical Energy Storage Systems", 2 August 2019 (2019-08-02), pages 1 - 138, XP082017539, Retrieved from the Internet <URL:https://www.iec.ch/cgi-bin/restricted/getfile.pl/57_2128e_DTR.pdf?dir=57&format=pdf&type=_DTR&file=2128e.pdf> [retrieved on 20190802]

## Description

### FIELD OF THE INVENTION

The present invention relates to a networked solar power generation plant system and a method of operating said system, each of the solar power generation plants is constituted by a plurality of solar power storage battery units, which generate and store solar electric powers and act as terminal units connected to a power transmission network via a power conditioner and each of which comprises: power generation units for generating electric powers from solar light; a storage battery for automatically charging the electric powers generated by the power generation units therein; a communication controller for controlling discharge output of the storage battery by instructions sent from outside, and the solar power storage battery units are connected to an external management computer by the communication controllers and via a communication network, so that the plants are virtually integrated as a networked solar power generation plant, and they are managed by the external management computer.

### BACKGROUND TECHNOLOGY

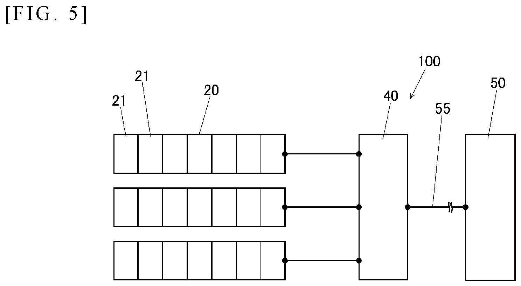

As shown in Fig. 5, in the conventional solar power generation plant 100, power generation units 20, in each of which a plurality of solar power generation panels 21 are serially connected, are provided, the power generation units 20 are parallelly connected to a power conditioner 40 and further connected to an electric power company 50.

Namely, as a basic structure of the solar power generation plant 100, the solar power generation panels 21 are serially connected to form one circuit of the power generation unit 20 and to adapt output voltage to an acceptable voltage of the power conditioner 40. Further, a plurality of circuits of the power generation units 20 are parallelly connected to the power conditioner 40 so as to form one power conditioner 40 system. Output power of the solar power generation plant 100 is sum of output powers of the power conditioners 40 which are parallelly connected.

A concrete example of the conventional solar power generation plant will be explained.

The general solar power generation panel 21 generates DC output whose normal power is 300W, maximum output voltage is 40V, normal generation voltage is 30V and normal generation current is 10A, the power generation unit 20 is constituted by seven solar power generation panels 21, which are serially connected and whose maximum output voltage is 280V, normal generation voltage is 210V, normal generation current is 10A and a system output power is 2100W (2.1 kW), and connected to the power conditioner 40. Note that, most of small-scale solar power generation plants and large-scale solar power generation plants have the above-described basic structure as a standardized structure. Number of the power generation unit systems connected to the power conditioner 40 is adjusted according to the output power of the power generation unit 20. For example, in case of the power conditioner 40 whose output power is 5kW, three solar power generation panel systems (the power generation units 20) of 2. 1kW are parallelly connected. In case of output power of 50kW, 30 systems are connected; in case of a mega solar generation plant of 1000kW, 600 systems are connected. The power conditioner 40 is capable of automatically generating AC electric power in proportion to DC electric power inputted from the solar power generation panel systems.

A solar power charging/discharging device is disclosed (see Patent Document 1) as a household solar power storage unit comprising: DC input terminals connected to solar power generation panels; DC output terminals connected to a power converter (a unit for converting a DC electric source into a commercial AC electric source); connection terminals to which signal lines of an electric power sensor are connected; and a control panel, which includes control circuits for controlling storage of electric powers in storage batteries and controlling DC output powers sent to the power converter on the basis of signals from the electric power sensor, being fixed to an exterior of the storage battery, wherein connection terminals of the control panel and the storage batteries are connected and integrated. With this device, a surplus electric power of the solar power generation can be stored, the stored electric power can be consumed by a home, and electricity bill of the home can be highly reduced.

A network system of solar battery charging units is disclosed (see Patent Document 2), and it comprises: a plurality of solar battery charging units, each of which includes a solar battery module installed on a building, a storage battery for storing electric power generated by the solar battery module, and a charging unit for charging an electric power to an electric vehicle; and a management device which is mutually communicably connected to the solar battery charging units via internet. With this network system of solar battery charging units, charging stands using solar power generation can be spread widely, and electric vehicles can be charged even at places of visit.

### PRIOR ART DOCUMENT

### PATENT LITERATURE

Patent Document 1: Japanese Registered Utility Model No. 3223017 (Page 1)
Patent Document 2: Japanese Laid-open Patent Publication No. 2021-97558 (Page 1)

KR 102 280 207 B1 discloses a method for controlling a solar power plant using an energy management device. The method comprises: a step of receiving first information related to the amount of power generated by solar power generation from a power generation measuring device; a step of receiving at least one of second information related to the amount of power converted measured by an inverter and third information related to the amount of solar radiation measured by an irradiance measuring device; and a step of controlling a charge/discharge control device based on at least one of the second information and the third information and the first information.

### SUMMARY OF THE INVENTION

### PROBLEMS TO BE SOLVED BY THE INVENTION

Japanese FIT program (Feed-in Tariff Program for Renewable Energy) has started from 2012, all of solar electric powers are generated and sold to electric power companies at the same time, so generation amounts of the solar electric powers are increased with spreading the solar power generation, and there are social problems that the power generation amounts of the solar electric powers during the daytime become excessive and that the amounts become insufficient during evening and night. These days, solar power plants are required to be able to stop generating electricity during the daytime in order to prevent excess electricity, and power generation is stopped by installing a power generation stopping device. Thus, electric power companies incur economic losses due to the loss of generated energy during stoppage of power generation, and there is a social problem that electric power shortages occur in hours other than daytime hours when excess electricity is generated.

An object of the present invention is to provide a networked solar power generation plant system, in which solar power generation plants are virtually integrated and which is capable of accurately and suitably discharge-outputting electric powers stored in the networked solar power generation plants, at optional time and in an optional amount, to the power transmission network without stopping solar power generation, and a method of operating said system.

### MEANS FOR SOLVING THE PROBLEMS

An embodiment is a networked solar power generation plant system according to claim 1 comprising: a plurality of solar power generation plants; and a power transmission network, wherein each of the solar power generation plants is constituted by a plurality of solar power storage battery units, which generate and store solar electric powers and act as terminal units connected to the power transmission network via a power conditioner and each of which comprises: a power generation unit for generating electric power from solar light; a storage battery for automatically charging the electric power generated by the power generation unit therein; a communication controller for controlling discharge output of the storage batteries on the basis of instructions from outside, wherein the solar power storage battery units are connected to an external management computer, by the communication controllers, via a communication network apart from a network for connecting to an electric power company through examined wattmeters such that the solar power storage battery units are virtually integrated as the networked solar power generation plant and can be managed by the external management computer, wherein the external management computer accesses to operating informations through an information network, the operating informations include: identification informations for identifying each of the solar power storage battery units, the identification informations being given to the communication controllers; specific informations of the solar power storage battery units including at least installation locations, the specific informations being linked to associate with the identification informations; power storage informations of the solar power storage battery units including at least power storage amounts, the power storage informations being linked to associate with the identification informations, the power storage informations being variation informations; and an electric power demand informations being an external information relating to electric power demand, the electric power demand informations being variation informations, and wherein the external management computer produces a discharge output plan for each of the solar power storage battery units, on the basis of the identification informations, the specific informations, the power storage informations and the electric power demand informations, and controls discharge output of each of the solar power storage battery units such that electric powers stored in the networked solar power generation plants can be discharge-outputted, at optional time and in an optional amount, to the power transmission network.

In the embodiment of the networked solar power generation plant system, wherein each of the power storage informations may include the power storage amount which is estimated from measured voltage of the storage battery.

In the embodiment of the networked solar power generation plant system, each of the solar power storage battery units may comprise: the power generation unit; the storage battery for charging electric power generated by the power generation unit through a charge circuit and discharging the same through a discharge circuit; means for obtaining an electric power storage information being connected to the storage battery; and the communication controller for receiving instructions from the external management computer and controlling the discharge circuit so as to transmit the electric power storage information to outside and control the discharge output of the storage battery, and a storage battery unit may be constituted by unitizing the storage battery, the charge circuit, the discharge circuit, the obtaining means and the communication controller, and the storage battery unit may be connected between the power generation unit and the power conditioner.

In the embodiment of the networked solar power generation plant system, the information network may be provided such that the external management computer is capable of accessing to informations of amounts of output powers, which can be obtained by measuring output voltages and output currents of the storage batteries, with time, as an information of discharge output of each of the solar power storage battery units.

Another embodiment is a method of operating the networked solar power generation plant system with using the external management computer, comprising: a step of obtaining the power storage amount from the power storage information of each of the solar power storage battery units by the external management computer; a step of obtaining the amount of electric power demand, which is estimated from the electric power demand informations, by the external management computer; a step of producing the discharge output plan for each of the solar power storage battery units, on the basis of the identification information, the specific information, the power storage information and the electric power demand information, by the external management computer, as an electric power supply plan for supplying electric power from the solar power generation plant network to the power transmission network; and a step of performing discharge output of each of the solar power storage battery units by instructions of the external management computer on the basis of the discharge output plan.

The embodiment of the method may further comprise a step of grasping an operating condition of each of the solar power storage battery units by collating an information of an estimated amount of output electric power, which is estimated from the discharge output plan of each of the solar power storage battery units, with an information of an amount of output electric power discharge-outputted to the power transmission network, which is obtained by measuring the output voltage and the output current of the storage battery with time and which is controlled by controlling discharge output of each of the solar power storage battery units, by the external management computer, and correcting the discharge output plan and the control of each of the solar power storage battery units by the external management computer.

The embodiment of the method may further comprise a step of grasping an operating condition of each of the solar power generation plants by collating an information of an amount of electric power supply, which is supplied from the solar power generation plants to the power transmission network and which is obtained by measuring by the examined wattmeter provided to each of the solar power generation plants, with an information of an estimated amount of electric power supply, which is obtained by integrating the information data of the amount of electric power supply from each of the solar power storage battery units, by the external management computer, and correcting the discharge output plan and the control of each of the solar power storage battery units by the external management computer.

### EFFECTS OF THE INVENTION

The networked solar power generation plant system and the operating method of the present invention have the advantageous effect that the solar power generation plants are virtually integrated and capable of accurately and suitably discharge-outputting electric powers stored in the networked solar power generation plants, at optional time and in an optional amount, to the power transmission network without stopping solar power generation.

Independent claim 1 defines the invention. The dependent claims 2 to 7 state embodiments according to the invention.

### BRIEF DESCRIPTION OF THE DRAWINGS

[Fig. 1] is a diagram of an embodiment of the networked solar power generation plant system relating to the present invention.
[Fig. 2] is an explanation diagram of an operation example of the networked solar power generation plant system relating to the present invention.
[Fig. 3] is a connection diagram of the solar power generation plant shown in Fig. 1.
[Fig. 4] is a connection diagram of a storage battery unit shown in Fig. 1.
[Fig. 5] is a connection diagram of the conventional solar power generation plant.

### EMBODIMENTS OF THE INVENTION

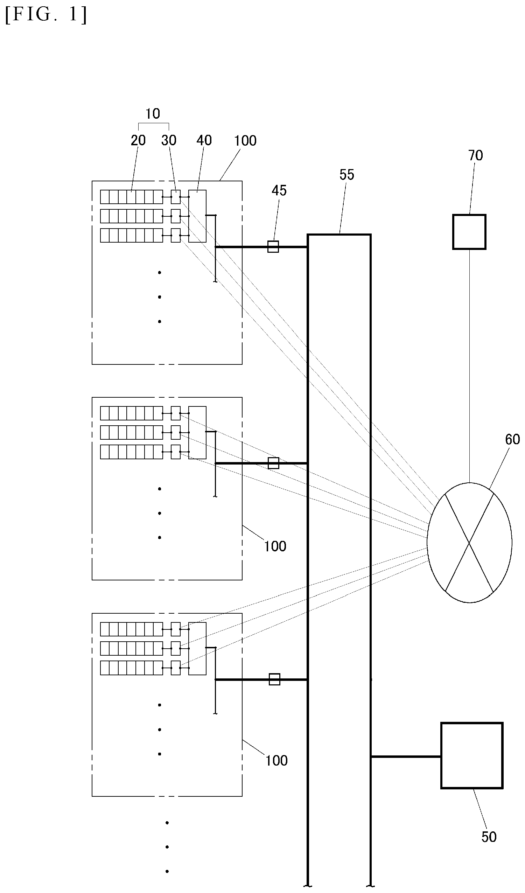

Embodiments of the networked solar power generation plant system relating to the present invention and the method of operating the same will now be described in detail with reference to the accompanying drawings (Figs. 1-4).

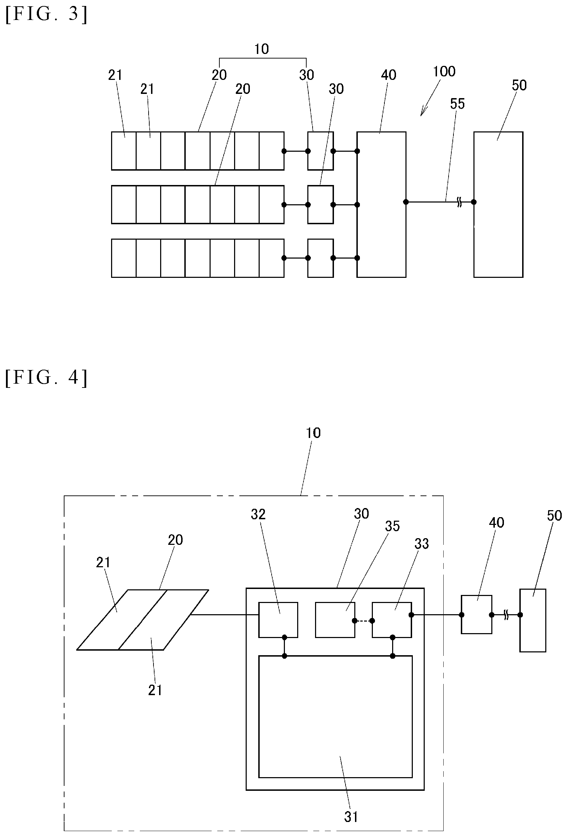

As shown in Figs. 1-4, the networked solar power generation plant system relating to the present invention comprises a plurality of solar power generation plants 100, each of which is constituted by a plurality of solar power storage battery units 10 for generating and storing solar electric powers and acting as terminal units connected to a power transmission network 55 via power conditioners 40, and each of the solar power storage battery units comprises: power generation units 20 for generating electric powers from solar light; a storage battery 31 (see Fig. 4) for automatically charging the electric powers generated by the power generation units 20 therein; and a communication controller 35 (see Fig. 4) for controlling discharge output of the storage battery 31 on the basis of instructions from outside.

The solar power storage battery units 10 are connected to an external management computer 70 by the communication controllers 35 via a communication network (e.g., internet 60) apart from a network for connecting to an electric power company through examined wattmeters such that the solar power storage battery units are virtually integrated as the networked solar power generation plants and can be managed by the external management computer 70.

Further, in the networked solar power generation plant system relating to the present invention, an arithmetic unit of the external management computer 70, etc. accesses to and processes operating informations through an information network, the operating informations include: identification informations for identifying the solar power storage battery units 10, the identification informations being respectively given to the communication controllers 35; specific informations of the solar power storage battery units 10 including at least installation locations, the specific informations being linked to associate with the identification informations; power storage informations of the solar power storage battery units 10 including at least power storage amounts, the power storage informations being linked to associate with each of the identification informations, the power storage informations being variation informations; and electric power demand informations being external informations relating to electric power demand, the electric power demand informations being variation informations.

In the networked solar power generation plant system of the present invention, the external management computer 70 produces a discharge output plan for each of the solar power storage battery units 10, on the basis of the identification informations, the specific informations, the power storage informations and the electric power demand informations, and controls discharge output of each of the solar power storage battery units 10 such that electric powers stored in the networked solar power generation plants can be discharge-outputted, at optional time and in an optional amount, to the power transmission network 55. Note that, the information processing of the present invention may be, off course, performed by cloud computing, distributed processing (with a plurality of servers), etc.

With the above-described structure, the networked solar power generation plants, which are virtually integrated, can be rationally managed, solar powers can be used without being wasted and without stopping the solar power generation plants 100, so that the networked solar power generation plant system has an advantageous effect of accurately and suitably discharge-outputting electric powers stored in the networked solar power generation plants, at optional time and in an optional amount, to the power transmission network. The solar power storage battery units 10 are respectively managed, so that degradations of a power generation performance and a battery storage performance and equipment failures can be grasped by minimum units, and so that problems can be found and dealt without stopping the entire solar power generation plants 100.

Note that, in the present invention, the identification informations are identification means being managed by the external management computer 70, such as identification codes, e.g., identification numbers, combinations of figures, symbols.

In the present invention, the specific informations are fixed informations such as installation location informations, specific informations of the solar power generation panels 21 (configurations of power generation devices constituting the power generation units 20) and the storage batteries 31, which will deteriorate with laps of time, etc.

In the present invention, the power storage informations may include variable informations of each of the solar power storage battery units 10 used for grasping power storage conditions thereof, such as the power storage amount informations, which are estimated from measured voltages of the storage batteries 31, power storage amount informations, which are respectively estimated for each area (for each of the solar power generation plants 100) under weather conditions, etc.

Further, the electric power demand informations may include variation informations, e.g., market prices of electric powers other than FIT prices decided by JEPX (Japan Electric Power Exchange), local demand forecasting varied in each area by weather conditions.

These informations can be used for, for example, deciding priority of discharge output of the solar power storage battery units 10, selecting or excluding the solar power storage battery units 10 whose discharge outputs are performed at specific times or in specific areas. For example, electric power can be controlled to discharge, with priority, from the solar power storage battery units 10 close to an area where electric power demand is high, the solar power storage battery units 10 storing high electric powers are controlled to discharge with priority, etc., so that the networked solar power generation plant system can be optimally operated.

In the present embodiment, the external management computer 70 is capable of accessing to an information of amount of output electric power, which is an information of discharge output of each of the solar power storage battery units 10 obtained by measuring output voltage and output current of the storage battery 31 with time, through the information network. With this structure, as described later, operating conditions of the networked solar power generation plant system can be suitably grasped and suitably corrected, so that the network system can be optimally operated.

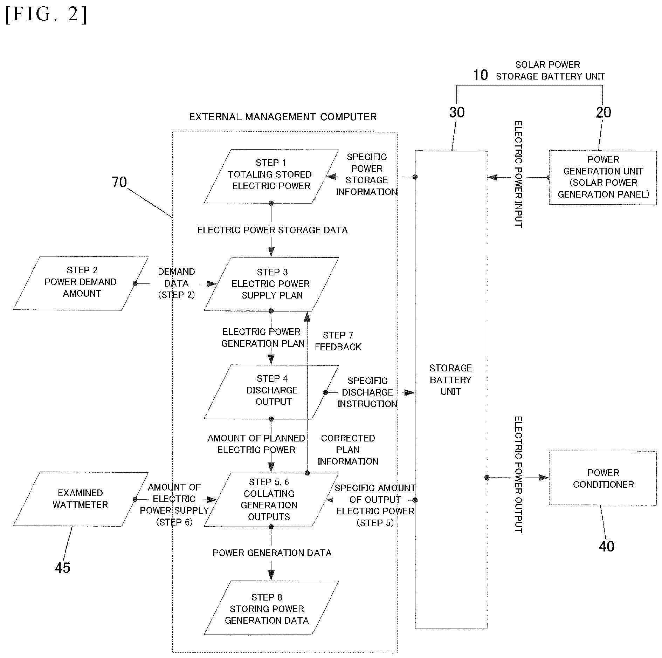

Next, an embodiment of the method of operating the networked solar power generation plant system will be explained with reference to Fig. 2. In this method, the networked solar power generation plant system is controlled and operated by the external management computer 70, and the method comprises: a step of obtaining the power storage amount (Step 1); a step of obtaining the amount of electric power demand (Step 2); a step of producing the discharge output plan (Step 3); a step of performing discharge output (Step 4); and a step of collating output powers. The step of collating output powers may include: a step of collating a plan information of an amount of output electric power of each of the solar power storage battery units 10 with an information of an amount of output electric power of each of the solar power storage battery units 10 (Step 5); and a step of collating an information of an estimated amount of electric power supply of the solar power generation plant 100, which is obtained by integrating the information of the amount of output electric power supply of each of the solar power storage battery units 10, with an information of an amount of electric power supply, which is measured by the examined wattmeter 45 provided to each of the solar power generation plant 100 (Step 6).

In the step of obtaining the power storage amount (Step 1), the external management computer 70 obtains the power storage amount from the power storage information of each of the solar power storage battery units 10. With this manner, the power storage amount of the entire networked solar power generation plants, and the power storage amount of each of the solar power storage battery units 10, which is a terminal unit for generating and storing solar power, can be obtained, so that the network system can be managed to highly effectively supply electric powers to the power transmission network 55. For example, the external management computer 70 is capable of obtaining (monitoring) the power storage amount from data (e.g., voltage data, current data) intermittently generated by (transmitted from) the communication controllers 35.

In the step of obtaining the amount of electric power demand (Step 2), the external management computer 70 obtains an estimated amount of electric power demand, which is estimated from, for example, an electric power demand informations of JEPX (Japan Electric Power Exchange). Thus, in case that electric power demand is greater than stored electric power, all of the solar power storage battery units 10 discharge-output so as to supply the stored electric powers of the entire networked solar power generation plants to the power transmission network 55. On the other hand, in case that electric power demand is less than the stored electric power, for example, priority of discharge output of each of the solar power storage battery units 10 may be decided and managed as described above.

In the step of producing the discharge output plan (Step 3), the external management computer 70 produces the discharge output plan of each of the solar power storage battery units 10, as an electric power supply plan from the networked solar power generation plants to the power transmission network 55, on the basis of the identification informations, the specific informations, the power storage informations and the electric power demand informations. With this manner, an accurate and optimum discharge output plan can be produced.

In the step of performing discharge output (Step 4), the external management computer 70 controls each of the solar power storage battery units 10 to perform discharge output on the basis of the discharge output plan. With this manner, the electric power stored in the networked solar power generation plants can be accurately and optimally discharge-outputted to the power transmission network at optional time and in an optional amount.

In the present embodiment, the step of grasping the operating condition of each of the solar power storage battery units 10 may include: collating the information of the estimated amount of output electric power, which is estimated from the discharge output plan of each of the solar power storage battery units 10, with the information of the amount of output electric power discharge-outputted to the power transmission network 55, which is the information obtained by measuring the output voltages and the output currents of the storage batteries 31 and used for controlling discharge output of each of the solar power storage battery units 10, by the external management computer 70; and correcting the discharge output plan and the control of each of the solar power storage battery units 10 by the external management computer 70 (Step 5) as shown in Fig. 2. With this manner, the control of discharge-outputting the electric power stored in the networked solar power generation plants to the power transmission network 55, at optional time and in an optional amount, can be feedbacked (Step 7), so that the management of each of the solar power generation plants 100 and each of the solar power storage battery units 10 can be highly accurately and optimally performed.

Further, in the present embodiment, the step of grasping the operating condition of each of the solar power generation plant 100 may include: collating the information of the supply amount of electric power, which is supplied from the solar power generation plant 100 to the power transmission network 55 and which is obtained by measuring with the examined wattmeter 45 provided to each of the solar power generation plants 100 and sent to the external management computer 70 through the network of the electric power company, with the information of the estimated supply amount of electric power, which is obtained by integrating the information of the supply amount of electric power of each of the solar power storage battery units 10, by the external management computer 70; and correcting the discharge output plan and the control of each of the solar power storage battery units 10 by the external management computer 70 (Step 6) as shown in Fig. 2. With this manner too, the control of discharge-outputting the electric power stored in the networked solar power generation plants 100 to the power transmission network 55, at optional time and in an optional amount, can be feedbacked (Step 7), so that the management of each of the solar power generation plants 100 and each of the solar power storage battery units 10 can be highly accurately and optimally performed.

Further, in the present embodiment, a step of storing the data of generating electric power collated in Step 5 and Step 6 may be included as shown in Fig. 2 (Step 8). The stored data may be used for AI-learning. Informations obtained by the AI-learning can be used for highly accurately and optimally operating each of the solar power generation plants 100 and the networked solar power generation plants.

In the solar power generation plant 100 of an embodiment shown in Fig. 3, a storage unit 30 including the communication controller 35 and the storage battery 31 (see Fig. 4) is provided between each of the power generation units 20 and the power conditioner 40, so that each of the solar power storage battery unit 10 is constituted by the power generation unit 20 and the storage unit 30. By using the storage units 30, the external management computer 70 is capable of managing to charge the electric power generated by the power generation units 20 and optionally discharging the stored electric power to the power conditioner 40 (see Fig. 2). The storage units 30 may be simply connected to the power generation units 20 and the power conditioner 40, and electric powers for actuating the storage units 30 (the communication controllers 35, etc.) can be supplied from the power generation units 20.

A concrete structural example of the solar power generation plant 100 will be explained with reference to Fig. 3, each of the power generation circuits (the power generation units 20) is constituted by seven solar power generation panels 21, each of whose output power is 300W and whose total output power is 2.1kW, output voltage is DC 280V and output current is DC 7.5A. Three circuits of the power generation units 20 are parallelly connected to the power conditioner 40, so that a power conditioner system of 5kW can be formed. The storage units 30 are respectively connected to the power generation units 20 of the three circuits. Note that, each of the storage units 30 may have the storage battery 31 of 100kWh (see Fig. 4) such that most of electric powers generated during the daytime can be charged.

The storage unit 30 of an embodiment shown in Fig. 4 comprises: a charging circuit 32; the storage battery 31 to which all amount of electric power generated in the power generation unit 20 is automatically charged by the charging circuit 32; a discharging circuit 33 for discharging the electric power stored in the storage battery 31 to the power conditioner 40; and the communication controller 35 for remote-controlling the discharging circuit 33. A voltmeter (not shown), which measures voltage to obtain the amount of stored electric power, and an ammeter (not shown), which measures the output current to calculate the amount of electric power from the output voltage measured by the voltmeter and the output current, are connected to the storage battery 31, and the communication controller 35 is further connected so as to send the informations, e.g., the voltage relating to the amount of stored electric power, the output voltage, the output current, to the external management computer 70. Namely, in the embodiment shown in Fig. 4, the solar power storage battery unit 10 comprises: the power generation unit 20; the storage battery 31 to which the electric power generated by the power generation unit 20 is charged through the charging circuit 32 and from which the electric power is discharged through the discharging circuit 33; means for obtaining the electric power storage information being connected to the storage battery 31; and the communication controller 35 capable of sending the electric power storage information to outside and receiving instructions from the external management computer 70 so as to control the discharging circuit 33 and control the discharge output of the storage battery 31, and the storage battery 31, the charging circuit 32, the discharging circuit 33, the means for obtaining the electric power storage information and the communication controller 35 are unitized, so that the storage unit 30, which is connected between the power generation unit 20 and the power conditioner 40, is constituted. Note that, the means for obtaining the electric power storage information is constituted by, for example, the described voltmeter and ammeter.

By the above-described structure, all of the solar electric powers can be stored in the storage battery 31, so an approximate amount of storing electric powers for a day can be grasped, depending on the seasons, around 3:00 pm. For example, in case that an amount of electric power demand is increased from around 5:00 pm, opposing to reduction of the amount of generating solar powers, the networked solar power generation plant system is capable of freely discharging electric powers, at required time and in a required amount, by respectively controlling a plurality of (a large number of) selected solar power storage battery units 10. With this manner, the solar power generation plants need not be stopped so as to prevent generation of surplus electric powers, so that solar energy can be effectively used. Note that, in the present embodiment, the solar power generation system capable of selling all of the generated electric powers is assumed, but the plants may consume electric powers for actuating the system, and the generated electric powers, off course, may be freely used. Further, in the present embodiment, all of the generated electric powers are charged in the storage batteries 31 but not limited thereto, and another circuit for directly sending a part or all of the generated electric powers, depending on time periods, to the power conditioner 40 and supplying them to the power transmission network 55 may be added.

A large number of the solar power storage battery units 10, which are constituted by the power generation units 20 and the storage units 30, are installed, the solar power storage battery units 10 can be mass-produced at low cost, so that facility costs (initial costs) of the networked solar power generation plant system can be reduced. Further, the storage units 30 are respectively provided to the power generation units 20 and can be dispersively installed, so that there is an effect that no space is required. Namely, the storage units 30 may be accommodated in, for example, durable and waterproof cases, so that they can be dispersively installed outside and respectively corresponded to the power generation units 20.

Many manufacturers who manufacture the power generation units 20 (e.g., the solar power generation panels 21) and the power conditioners 40 exist, but a basic specification of the power generation circuits are the same. Therefore, in case that the storage units 30 are attached to the installed power generation units 20 later, the storage units 30 can be standardized and easily installed in the existing solar power generation plants 100. Therefore, the storage units 30 can be mass-produced, and production costs thereof can be reduced.

The information network of the present embodiment may be, for example, the internet 60, and wireless LANs (Local Area Network) may be used in the solar power generation plants 100. By using widely used Wi-Fis as the wireless LAN, the information network can be easily constructed at low cost. Note that, mobile phone networks, Bluetooth, etc. may be used, other than the above-described means, as communication means.

The present invention relates to the solar power generation plant system, but the system of the present invention may be, off course, applied to other power generation systems, e.g., natural energy power generation plants using wind power, water power, etc. Further, an additional control/management system may be added so as to charge/discharge surplus electric powers of the commercial electric powers, which are generated in baseload electric sources, to/from the storage batteries 31 in accordance with the estimated electric power demand.

The preferred embodiments of the present invention have been described, but the present invention is not limited to the above embodiments, and many alternations could be made hereto without departing from the invention defined by the appended claims.

### EXPLANATION OF REFERENCE SYMBOLS

- 10: SOLAR POWER STORAGE BATTERY UNIT
- 20: POWER GENERATION UNIT
- 21: SOLAR POWER GENERATION PANEL
- 30: STORAGE BATTERY UNIT
- 31: STORAGE BATTERY
- 32: CHARGING CIRCUIT
- 33: DISCHARGING CIRCUIT
- 35: COMMULNICATION CONTROLLER
- 40: POWER CONDITIONER
- 45: EXAMINED WATTMETER
- 50: ELECTRIC POWER COMPANY
- 55: POWER TRANSMISSION NETWORK
- 60: INTERNET
- 70: EXTERNAL MANAGEMENT COMPUTER
- 100: SOLAR POWER GENERATION PLANT

## Claims

1. A networked solar power generation plant system comprising: a plurality of solar power generation plants (100); and a power transmission network (55),
wherein each of the solar power generation plants (100) is constituted by a plurality of solar power storage battery units (10), which are configured to generate and store solar electric powers and to act as terminal units connected to the power transmission network (55) via a power conditioner (40) configured to convert direct current, DC, power to alternate current, AC, power, and wherein each of which comprises:
a power generation unit (20) for generating electric power from solar light; a storage battery (31) for automatically charging the electric power generated by the power generation unit (20) therein; a communication controller (35) for controlling discharge output of the storage batteries (31) on the basis of instructions from outside,
wherein the solar power storage battery units (10) are connected to an external management computer (70), by the communication controllers (35), via a communication network (60) apart from a network for connecting to an electric power company (50) through examined wattmeters (45) such that the solar power storage battery units (10) are virtually integrated as the networked solar power generation plant and can be managed by the external management computer (70), and
wherein the external management computer (70) is configured to access operating informations through an information network (60), wherein the operating informations include:
identification informations for identifying each of the solar power storage battery units (10), wherein the external management computer (70) is configured to provide the identification informations to the communication controllers (35);
specific informations of the solar power storage battery units (10) including at least installation locations, the specific informations being associated with the identification informations;
power storage informations of the solar power storage battery units (10) including at least power storage amounts, the power storage informations being associated with the identification informations, the power storage informations being variation informations; and
electric power demand informations being external informations relating to electric power demands, the electric power demand informations being variation informations,
wherein the storage battery (31) is coupled between the power generation unit (20) and the power conditioner (40) to have all amount of electric power generated in the power generation unit (20) automatically charged by the charging circuit (32) to the storage battery (31);
wherein the external management computer (70) is configured
to produce a discharge output plan for each of the solar power storage battery units (10), on the basis of the identification informations, the specific informations, the power storage informations of the storage battery (31) and the electric power demand informations, and
to control discharge output of each of the solar power storage battery units (10) such that electric power stored in the networked solar power generation plants (100) can be discharge-outputted, at optional time and in an optional amount, to the power transmission network (55).

2. The networked solar power generation plant system according to claim 1, wherein each of the power storage informations includes the power storage amount which is estimated from measured voltage of the storage battery (31).

3. The networked solar power generation plant system according to claim 1, wherein the information network (60) is provided such that the external management computer (70) is capable of accessing to informations of amounts of output powers, which can be obtained by measuring output voltages and output currents of the storage batteries (31), with time, as an information of discharge output of each of the solar power storage battery units (10).

4. A method of operating the networked solar power generation plant system according to any one of claims 1-3 with using the external management computer (70), the method comprising:
a step of obtaining the power storage amount from the power storage information of each of the solar power storage battery units (10) by the external management computer (70);
a step of obtaining the amount of electric power demand, which is estimated from the electric power demand informations, by the external management computer (70); and
a step of performing discharge output of each of the solar power storage battery units (10) by instructions of the external management computer (70) on the basis of a discharge output plan;
the method also comprising a step of producing the discharge output plan for each of the solar power storage battery units (10), on the basis of the identification information, the specific information, the power storage information and the electric power demand information, by the external management computer (70), as an electric power supply plan for supplying electric powers from the solar power generation plant network to the power transmission network (55).

5. The method according to claim 4, further comprising a step of grasping an operating condition of each of the solar power storage battery units (10) by collating an information of an estimated amount of output electric power, which is estimated from the discharge output plan of each of the solar power storage battery units (10), with an information of an amount of output electric power discharge-outputted to the power transmission network (55), which is obtained by measuring the output voltage and the output current of the storage battery with time and which is controlled by controlling discharge output of each of the solar power storage battery units (10), by the external management computer (70), and correcting the discharge output plan and the control of each of the solar power storage battery units (10) by the external management computer (70).

6. The method according to claim 5, further comprising: a step of grasping an operating condition of each of the solar power generation plants (100) by collating an information of an amount of electric power supply, which is supplied from the solar power generation plants (100) to the power transmission network (55) and which is obtained by measuring by the examined wattmeter (45) provided to each of the solar power generation plants (100), with an information of an estimated amount of electric power supply, which is obtained by integrating the information data of the amount of electric power supply from each of the solar power storage battery units (10), by the external management computer (70), and correcting the discharge output plan and the control of each of the solar power storage battery units by the external management computer (70).

7. The networked solar power generation plant system according to claim 1, wherein each of the solar power storage battery units (10) comprises:
the power generation unit (20);
the storage battery (31) for charging electric power generated by the power generation unit (20) through a charge circuit (32) and discharging the same through a discharge circuit (33);
means for obtaining an electric power storage information being connected to the storage battery (31); and
the communication controller (35) for receiving instructions from the external management computer (70) and controlling the discharge circuit (33) so as to transmit the electric power storage information to outside and control the discharge output of the storage battery (31), and
wherein a storage battery unit (30) is constituted by unitizing the storage battery (31), the charge circuit (32), the discharge circuit (33), the obtaining means and the communication controller (35), and the storage battery unit (30) is connected between the power generation unit (20) and the power conditioner (40).

## Patentansprüche

1. Vernetztes Solarenergieerzeugungsanlagensystem, umfassend: eine Vielzahl von Solarenergieerzeugungsanlagen (100); und ein Leistungsübertragungsnetzwerk (55),
wobei jede der Solarenergieerzeugungsanlagen (100) durch eine Vielzahl von Solarenergiespeicherbatterieeinheiten (10) gebildet ist, die konfiguriert sind, um solarelektrische Energien zu erzeugen und zu speichern, und um als Anschlusseinheiten zu wirken, die mit dem Leistungsübertragungsnetzwerk (55) über ein Netzschutzgerät (40) verbunden sind, das konfiguriert ist, um Gleichstromleistung, DC-Leistung, in Wechselstromleistung, AC-Leistung, umzuwandeln, und wobei jede von diesen umfasst:
eine Leistungserzeugungseinheit (20) zum Erzeugen von elektrischer Leistung aus Solarlicht; eine Speicherbatterie (31) zum automatischen Laden der elektrischen Leistung, die durch die Leistungserzeugungseinheit (20) darin erzeugt wird; eine Kommunikationssteuerung (35) zum Steuern der Entladeausgabe der Speicherbatterien (31) auf der Basis von Anweisungen von außen,
wobei die Solarenergiespeicherbatterieeinheiten (10) mit einem externen Verwaltungscomputer (70) durch die Kommunikationssteuerungen (35) über ein Kommunikationsnetzwerk (60), getrennt von einem Netzwerk zum Verbinden mit einem Energieversorgungsunternehmen (50) durch geprüfte Wattmeter (45), verbunden sind, derart, dass die Solarenergiespeicherbatterieeinheiten (10) als die vernetzte Solarenergieerzeugungsanlage virtuell integriert sind und durch den externen Verwaltungscomputer (70) verwaltet werden können, und
wobei der externe Verwaltungscomputer (70) konfiguriert ist, um auf Betriebsinformationen über ein Informationsnetzwerk (60) zuzugreifen, wobei die Betriebsinformationen einschließen:
Identifikationsinformationen zum Identifizieren jeder der Solarenergiespeicherbatterieeinheiten (10), wobei der externe Verwaltungscomputer (70) konfiguriert ist, um die Identifikationsinformationen den Kommunikationssteuerungen (35) bereitzustellen;
spezifische Informationen der Solarenergiespeicherbatterieeinheiten (10), die mindestens Installationsorte umfassen, wobei die spezifischen Informationen mit den Identifikationsinformationen verknüpft sind;
Leistungsspeicherinformationen der Solarenergiespeicherbatterieeinheiten (10), die mindestens Leistungsspeichermengen umfassen, wobei die Leistungsspeicherinformationen mit den Identifikationsinformationen verknüpft sind, wobei die Leistungsspeicherinformationen Variationsinformationen sind; und
Informationen über den Bedarf an elektrischer Leistung, die externe Informationen bezüglich der Nachfrage an elektrischer Leistung sind, wobei die Informationen über den Bedarf an elektrischer Leistung Variationsinformationen sind,
wobei die Speicherbatterie (31) zwischen die Leistungserzeugungseinheit (20) und das Netzschutzgerät (40) gekoppelt ist, sodass die gesamte Menge an elektrischer Leistung, die in der Leistungserzeugungseinheit (20) erzeugt wird, durch die Ladeschaltung (32) automatisch in die Speicherbatterie (31) geladen wird;
wobei der externe Verwaltungscomputer (70) konfiguriert ist,
um einen Entladeausgabeplan für jede der Solarenergiespeicherbatterieeinheiten (10) auf der Basis der Identifikationsinformationen, der spezifischen Informationen, der Leistungsspeicherinformationen der Speicherbatterie (31) und der Informationen über den Bedarf an elektrischer Leistung zu erstellen, und
um die Entladeausgabe jeder der Solarenergiespeicherbatterieeinheiten (10) derart zu steuern, dass elektrische Leistung, die in den vernetzten Solarenergieerzeugungsanlagen (100) gespeichert ist, zu einem optionalen Zeitpunkt und in einer optionalen Menge an das Leistungsübertragungsnetzwerk (55) als Entladung ausgegeben werden kann.

2. Vernetztes Solarenergieerzeugungsanlagensystem nach Anspruch 1, wobei alle Leistungsspeicherinformationen die Leistungsspeichermenge, die aus der gemessenen Spannung der Speicherbatterie (31) geschätzt wird, einschließen.

3. Vernetztes Solarenergieerzeugungsanlagensystem nach Anspruch 1, wobei das Informationsnetzwerk (60) derart bereitgestellt ist, dass der externe Verwaltungscomputer (70) in der Lage ist, auf Informationen über Mengen an Ausgabeleistungen, die durch Messen von Ausgangsspannungen und Ausgangsströmen der Speicherbatterien (31) über die Zeit erhalten werden können, als Informationen über die Entladeausgabe jeder der Solarenergiespeicherbatterieeinheiten (10) zuzugreifen.

4. Verfahren zum Betreiben des vernetzten Solarenergieerzeugungsanlagensystems nach einem der Ansprüche 1 bis 3 unter Verwendung des externen Verwaltungscomputers (70), das Verfahren umfassend:
einen Schritt des Erhaltens der Leistungsspeichermenge aus den Leistungsspeicherinformationen jeder der Solarenergiespeicherbatterieeinheiten (10) durch den externen Verwaltungscomputer (70);
einen Schritt des Erhaltens der Menge des Bedarfs an elektrischer Leistung, die aus den Informationen über den Bedarf an elektrischer Leistung durch den externen Verwaltungscomputer (70) geschätzt wird; und
einen Schritt des Durchführens einer Entladeausgabe jeder der Solarenergiespeicherbatterieeinheiten (10) durch Anweisungen des externen Verwaltungscomputers (70) auf der Basis eines Entladeausgabeplans;
das Verfahren ebenfalls umfassend
einen Schritt des Erstellens des Entladeausgabeplans für jede der Solarenergiespeicherbatterieeinheiten (10) auf der Basis der Identifikationsinformationen, der spezifischen Informationen, der Leistungsspeicherinformationen und der Informationen über den Bedarf an elektrischer Leistung durch den externen Verwaltungscomputer (70) als einen Versorgungsplan für elektrische Leistung zum Versorgen des Leistungsübertragungsnetzwerks (55) mit elektrischer Leistung von dem Solarenergieerzeugungsanlagennetzwerk.

5. Verfahren nach Anspruch 4, ferner umfassend einen Schritt des Erfassens eines Betriebszustands jeder der Solarenergiespeicherbatterieeinheiten (10) durch Abgleichen von Informationen über eine geschätzte Menge an Ausgabe von elektrischer Leistung, die aus dem Entladeausgabeplan jeder der Solarenergiespeicherbatterieeinheiten (10) geschätzt wird, mit Informationen über eine Menge an Ausgabe elektrischer Leistung, die an das Leistungsübertragungsnetzwerk (55) als Entladung ausgegeben wird, die durch Messen der Ausgangsspannung und des Ausgangsstroms der Speicherbatterie über die Zeit erhalten wird und die durch Steuern der Entladeausgabe jeder der Solarenergiespeicherbatterieeinheiten (10) durch den externen Verwaltungscomputer (70) gesteuert wird, und Korrigieren des Entladeausgabeplans und der Steuerung jeder der Solarenergiespeicherbatterieeinheiten (10) durch den externen Verwaltungscomputer (70).

6. Verfahren nach Anspruch 5, ferner umfassend: einen Schritt des Erfassens eines Betriebszustands jeder der Solarenergieerzeugungsanlagen (100) durch Abgleichen von Informationen über eine Menge an elektrischer Leistungsversorgung, die von den Solarenergieerzeugungsanlagen (100) dem Leistungsübertragungsnetzwerk (55) zugeführt wird und die durch Messen durch das geprüfte Wattmeter (45) erhalten wird, das für jede der Solarenergieerzeugungsanlagen (100) bereitgestellt ist, mit Informationen über eine geschätzte Menge an elektrischer Leistungsversorgung, die durch Integrieren der Informationsdaten der Menge an elektrischer Leistungsversorgung von jeder der Solarenergiespeicherbatterieeinheiten (10) durch den externen Verwaltungscomputer (70) erhalten wird, und Korrigieren des Entladeausgabeplans und der Steuerung jeder der Solarenergiespeicherbatterieeinheiten durch den externen Verwaltungscomputer (70).

7. Vernetztes Solarenergieerzeugungsanlagensystem nach Anspruch 1, wobei jede der Solarenergiespeicherbatterieeinheiten (10) umfasst:
die Leistungserzeugungseinheit (20);
die Speicherbatterie (31) zum Laden von elektrischer Leistung, die durch die Leistungserzeugungseinheit (20) erzeugt wird, über eine Ladeschaltung (32), und zum Entladen derselben über eine Entladeschaltung (33);
Mittel zum Erhalten von Informationen über die Speicherung elektrischer Leistung, die mit der Speicherbatterie (31) verbunden sind; und
die Kommunikationssteuerung (35) zum Empfangen von Anweisungen von dem externen Verwaltungscomputer (70) und Steuern der Entladeschaltung (33), um die Informationen über die Speicherung elektrischer Leistung nach außen zu übertragen und die Entladeausgabe der Speicherbatterie (31) zu steuern, und
wobei eine Speicherbatterieeinheit (30) durch Modularisieren der Speicherbatterie (31), der Ladeschaltung (32), der Entladeschaltung (33), der Erhaltungsmittel und der Kommunikationssteuerung (35) gebildet wird, und die Speicherbatterieeinheit (30) zwischen der Leistungserzeugungseinheit (20) und dem Netzschutzgerät (40) verbunden ist.

## Revendications

1. Système de centrales de production d'énergie solaire en réseau comprenant : une pluralité de centrales de production d'énergie solaire (100) ; et un réseau de transport d'énergie (55),
dans lequel chacune des centrales de production d'énergie solaire (100) est constituée par une pluralité d'unités de batterie d'accumulateurs d'énergie solaire (10), qui sont configurées pour produire et stocker des énergies électriques solaires et pour agir en tant qu'unités terminales connectées au réseau de transport d'énergie (55) par l'intermédiaire d'un conditionneur d'énergie (40) configuré pour convertir une énergie en courant continu, CC, en une énergie en courant alternatif, CA, et dans lequel chacune d'elles comprend :
une unité de production d'énergie (20) pour produire de l'énergie électrique à partir de la lumière solaire ; une batterie d'accumulateurs (31) pour y charger automatiquement l'énergie électrique produite par l'unité de production d'énergie (20) ; un dispositif de commande de communication (35) pour commander une sortie de décharge des batteries d'accumulateurs (31) sur la base d'instructions provenant de l'extérieur,
dans lequel les unités de batterie d'accumulateurs d'énergie solaire (10) sont connectées à un ordinateur de gestion externe (70), par les dispositifs de commande de communication (35), par l'intermédiaire d'un réseau de communication (60) distinct d'un réseau de connexion à une compagnie d'électricité (50) par le biais de wattmètres examinés (45) de telle sorte que les unités de batterie d'accumulateurs d'énergie solaire (10) sont virtuellement intégrées en tant que centrale de production d'énergie solaire en réseau et peuvent être gérées par l'ordinateur de gestion externe (70), et
dans lequel l'ordinateur de gestion externe (70) est configuré pour accéder à des informations d'exploitation par le biais d'un réseau d'informations (60), dans lequel les informations d'exploitation comportent :
des informations d'identification pour identifier chacune des unités de batterie d'accumulateurs d'énergie solaire (10), dans lequel l'ordinateur de gestion externe (70) est configuré pour fournir les informations d'identification aux dispositifs de commande de communication (35) ;
des informations spécifiques des unités de batterie d'accumulateurs d'énergie solaire (10) comportant au moins des emplacements d'installation, les informations spécifiques étant associées aux informations d'identification ;
des informations de stockage d'énergie des unités de batterie d'accumulateurs d'énergie solaire (10) comportant au moins des quantités de stockage d'énergie, les informations de stockage d'énergie étant associées aux informations d'identification, les informations de stockage d'énergie étant des informations de variation ; et
des informations de demande d'énergie électrique étant des informations externes relatives à des demandes d'énergie électrique, les informations de demande d'énergie électrique étant des informations de variation,
dans lequel la batterie d'accumulateurs (31) est couplée entre l'unité de production d'énergie (20) et le conditionneur d'énergie (40) pour que toute la quantité d'énergie électrique produite dans l'unité de production d'énergie (20) soit automatiquement chargée par le circuit de charge (32) dans la batterie d'accumulateurs (31) ;
dans lequel l'ordinateur de gestion externe (70) est configuré
pour produire un plan de sortie de décharge pour chacune des unités de batterie d'accumulateurs d'énergie solaire (10), sur la base des informations d'identification, des informations spécifiques, des informations de stockage d'énergie de la batterie d'accumulateurs (31) et des informations de demande d'énergie électrique, et
pour commander une sortie de décharge de chacune des unités de batterie d'accumulateurs d'énergie solaire (10) de telle sorte que de l'énergie électrique stockée dans les centrales de production d'énergie solaire en réseau (100) peut être délivrée par décharge, à un moment et en une quantité au choix, vers le réseau de transport d'énergie (55).

2. Système de centrales de production d'énergie solaire en réseau selon la revendication 1, dans lequel chacune des informations de stockage d'énergie comporte la quantité de stockage d'énergie qui est estimée à partir d'une tension mesurée de la batterie d'accumulateurs (31).

3. Système de centrales de production d'énergie solaire en réseau selon la revendication 1, dans lequel le réseau d'informations (60) est prévu de telle sorte que l'ordinateur de gestion externe (70) peut accéder à des informations de quantités d'énergies de sortie, qui peuvent être obtenues en mesurant des tensions de sortie et des courants de sortie des batteries d'accumulateurs (31), en fonction du temps, en tant qu'informations de sortie de décharge de chacune des unités de batterie d'accumulateurs d'énergie solaire (10).

4. Procédé d'exploitation du système de centrales de production d'énergie solaire en réseau selon l'une quelconque des revendications 1 à 3 en utilisant l'ordinateur de gestion externe (70), le procédé comprenant :
une étape consistant à obtenir la quantité de stockage d'énergie auprès des informations de stockage d'énergie de chacune des unités de batterie d'accumulateurs d'énergie solaire (10) par l'ordinateur de gestion externe (70) ;
une étape consistant à obtenir la quantité de demande d'énergie électrique, qui est estimée à partir des informations de demande d'énergie électrique, par l'ordinateur de gestion externe (70) ; et
une étape consistant à réaliser une sortie de décharge de chacune des unités de batterie d'accumulateurs d'énergie solaire (10) par des instructions de l'ordinateur de gestion externe (70) sur la base d'un plan de sortie de décharge ;
le procédé comprenant également
une étape consistant à produire le plan de sortie de décharge pour chacune des unités de batterie d'accumulateurs d'énergie solaire (10), sur la base des informations d'identification, des informations spécifiques, des informations de stockage d'énergie et des informations de demande d'énergie électrique, par l'ordinateur de gestion externe (70), en tant que plan d'alimentation en énergie électrique pour alimenter en énergies électriques, à partir du réseau de centrales de production d'énergie solaire, le réseau de transport d'électricité (55).

5. Procédé selon la revendication 4, comprenant en outre une étape consistant à déterminer une condition d'exploitation de chacune des unités de batterie d'accumulateurs d'énergie solaire (10) en compilant des informations d'une quantité estimée d'énergie électrique de sortie, qui est estimée à partir du plan de sortie de décharge de chacune des unités de batterie d'accumulateurs d'énergie solaire (10), avec des informations d'une quantité d'énergie électrique de sortie délivrée par décharge au réseau de transport d'énergie (55), qui est obtenue en mesurant la tension de sortie et le courant de sortie de la batterie d'accumulateurs dans le temps et qui est commandée en commandant la sortie de décharge de chacune des unités de batterie d'accumulateurs d'énergie solaire (10), par l'ordinateur de gestion externe (70), et en corrigeant le plan de sortie de décharge et la commande de chacune des unités de batterie d'accumulateurs d'énergie solaire (10) par l'ordinateur de gestion externe (70).

6. Procédé selon la revendication 5, comprenant en outre : une étape consistant à déterminer un état d'exploitation de chacune des installations de production d'énergie solaire (100) en compilant des informations d'une quantité d'alimentation en énergie électrique, qui est alimentée par les installations de production d'énergie solaire (100) au réseau de transport d'énergie (55) et qui est obtenue par une mesure par le wattmètre examiné (45) prévu pour chacune des installations de production d'énergie solaire (100), avec des informations d'une quantité estimée d'alimentation en énergie électrique, qui est obtenue en intégrant les données d'informations de la quantité d'alimentation en énergie électrique provenant de chacune des unités de batterie d'accumulateurs d'énergie solaire (10), par l'ordinateur de gestion externe (70), et en corrigeant le plan de sortie de décharge et la commande de chacune des unités de batterie d'accumulateurs d'énergie solaire par l'ordinateur de gestion externe (70).

7. Système de centrales de production d'énergie solaire en réseau selon la revendication 1, dans lequel chacune des unités de batterie d'accumulateurs d'énergie solaire (10) comprend :
l'unité de production d'énergie (20) ;
la batterie d'accumulateurs (31) permettant de charger de l'énergie électrique produite par l'unité de production d'énergie (20) par le biais d'un circuit de charge (32) et décharger celle-ci par le biais d'un circuit de décharge (33) ;
un moyen permettant d'obtenir des informations de stockage d'énergie électrique étant connecté à la batterie d'accumulateurs (31) ; et
le dispositif de commande de communication (35) permettant de recevoir des instructions en provenance de l'ordinateur de gestion externe (70) et de commander le circuit de décharge (33) de manière à transmettre les informations de stockage d'énergie électrique vers l'extérieur et à commander la sortie de décharge de la batterie d'accumulateurs (31), et
dans lequel une unité de batterie d'accumulateurs (30) est constituée en unifiant la batterie d'accumulateurs (31), le circuit de charge (32), le circuit de décharge (33), le moyen d'obtention et le dispositif de commande de communication (35), et l'unité de batterie d'accumulateurs (30) est connectée entre l'unité de production d'énergie (20) et le conditionneur d'énergie (40).
